# EUROPEAN PATENT APPLICATION

(11) **EP 4 794 069 A1**
(43) Date of publication of application: **19.08.2026**
(21) Application number: 25864568.8
(22) Date of filing: 04.08.2025
(51) Int. Cl.: H01M 50/105, H01M 50/533

(54) **EXTERIOR MATERIAL AND BATTERY CELL COMPRISING SAME**

(30) Priority: 19.12.2024 KR 20240190767
(71) Applicant: LG ENERGY SOLUTION, LTD., Seoul 07335 (KR)
(72) Inventor: JO, Hyung Jun, Daejeon 34122 (KR); CHO, Sung Hwan, Daejeon 34122 (KR)
(74) Representative: BCKIP Part mbB
(86) International application number: PCT/KR2025/011563
(87) International publication number: WO 2026/134510

(57) **Abstract**

A battery cell according to an embodiment of the present invention may include: an electrode assembly in which a positive electrode and a negative electrode are alternatingly interposed with a separator therebetween; and a pouch-type exterior including an accommodation portion that is recess-formed to accommodate the electrode assembly. The accommodation portion may include a center region; and a pair of end regions located on opposite sides of the center region, having a depth dimension smaller than a depth dimension of the center region, and being asymmetric to each other.

## Description

### TECHNICAL FIELD

### CROSS-REFERENCE TO RELATED APPLICATIONS

This application claims priority to Korean Patent Application No. 10-2024-0190767, filed on December 19, 2024, the entire contents of which are incorporated herein by reference.

### TECHNICAL FIELD

The present invention relates to a pouch-type exterior and a battery cell including the same.

### BACKGROUND ART

In general, types of secondary batteries include nickel-cadmium batteries, nickel-hydrogen batteries, lithium-ion batteries, and lithium-ion polymer batteries. Such secondary batteries are applied and used not only in small products such as digital cameras, P-DVDs, MP3Ps, mobile phones, PDAs, Portable Game Devices, Power Tools, and E-bikes, but also in large products requiring high output, such as electric vehicles or hybrid vehicles, and in power storage devices and backup power storage devices that store surplus generated power or new and renewable energy.

To manufacture such a secondary battery, first, an electrode active material slurry is coated on a positive current collector and a negative current collector to manufacture a positive electrode and a negative electrode, and these are stacked on both sides of a separator to form an electrode assembly of a predetermined shape. Then, the electrode assembly is housed in an exterior, and after electrolyte injection, it is sealed.

A battery cell is classified into a Pouch Type and a Can Type, etc., according to the material of the exterior that accommodates the electrode assembly. The Pouch Type accommodates the electrode assembly in a pouch-type exterior made of a flexible polymer material. The Can Type accommodates the electrode assembly in an exterior made of a material such as metal or plastic.

Generally, a pouch-type exterior is manufactured by performing a press-forming process on a flexible pouch film to form a cup-shaped accommodation portion. After the accommodation portion is formed, the electrode assembly is housed inside the accommodation portion, and the terrace part is sealed to manufacture a battery cell.

The pouch-type exterior is formed to match the thickness of the electrode assembly, considering insertability. However, a sliding phenomenon may occur where the height of the electrode active material at the end part is not uniform and decreases. Due to this, a slight thickness difference occurs between the central part and the edge part of the electrode assembly.

Conventionally, since the accommodation portion of the pouch-type exterior was formed with a uniform depth without considering this thickness difference, empty space occurred inside the accommodation portion, which could lead to safety problems such as lithium precipitation or electrode shifting.

### SUMMARY

### TECHNICAL PROBLEM

One object to be solved by the present invention is to provide an exterior and a battery cell including the same, which appropriately compensate for the thickness difference of the electrode assembly.

### TECHNICAL SOLUTION

A battery cell according to an embodiment of the present invention may include: an electrode assembly in which a positive electrode and a negative electrode are alternatingly interposed with a separator therebetween; and a pouch-type exterior including an accommodation portion that is recess-formed to accommodate the electrode assembly. The accommodation portion may include a center region; and a pair of end regions located on opposite sides of the center region, having a depth dimension smaller than a depth dimension of the center region, and being asymmetric to each other.

The pair of end regions may be located inward of a punch edge connecting both side surfaces and a bottom surface of the accommodation portion.

The depth dimension of the pair of end regions may decrease toward the outside.

The pair of end regions may overlap a sliding portion of the positive electrode in a thickness direction of the electrode assembly.

The electrode assembly may be provided with: a positive electrode tab protruding from one side of the electrode assembly and electrically connected to the positive electrode; and a negative electrode tab protruding from the other side of the electrode assembly and electrically connected to the negative electrode. The pair of end regions may include a first end region located on one side of the center region from which the positive electrode tab protrudes; and a second end region located on the other side of the center region from which the negative electrode tab protrudes.

The widths of the first end region and the second end region may correspond to each other.

A depth dimension of a first point located within the first end region and located at a first distance from one side surface of the accommodation portion may be greater than a depth dimension of a second point located within the second end region and located at the first distance from the other side surface of the accommodation portion.

A depth dimension of a third point located within the first end region and located at a second distance smaller than the first distance from one side surface of the accommodation portion may be smaller than the depth dimension of the first point and greater than or equal to the depth dimension of the second point.

On one side of the electrode assembly from which the positive electrode tab protrudes, the end of the negative electrode may protrude by a first length with respect to the end of the positive electrode, and on the other side of the electrode assembly from which the negative electrode tab protrudes, the end of the negative electrode may protrude by a second length longer than the first length with respect to the end of the positive electrode.

The first length may correspond to the second distance, and the second length may correspond to the first distance.

In the first end region, a step may be formed such that the height decreases at the third point, and in the second end region, a step may be formed such that the height decreases at the second point.

An exterior according to an embodiment of the present invention may be a pouch-type exterior including an accommodation portion that is recess-formed. The accommodation portion may include a center region; and a pair of end regions located on opposite sides of the center region, having a depth dimension smaller than a depth dimension of the center region, and being asymmetric to each other.

### ADVANTAGEOUS EFFECTS

According to a preferred embodiment of the present invention, the empty space within the receiving part, which is caused by the thickness difference between the central part and the edge part of the electrode assembly, can be minimized, and problems such as lithium precipitation or electrode shifting, which may occur in the electrode assembly due to the empty space, can be resolved.

Furthermore, effects that are easily predictable by those skilled in the art from the configurations according to the preferred embodiments of the present invention may be included.

### BRIEF DESCRIPTION OF THE DRAWINGS

The following drawings attached to the present specification illustrate preferred embodiments of the present invention and serve to further enhance the understanding of the technical spirit of the present invention in conjunction with the detailed description of the invention to be described later. Therefore, the present invention should not be construed as being limited only to the matters described in such drawings.
FIG. 1 is an exploded perspective view of a battery cell according to an embodiment of the present invention.
FIG. 2 is a front view of the electrode assembly shown in FIG. 1.
FIG. 3 is an enlarged view illustrating a part of the positive electrode shown in FIG. 2.
FIG. 4 is a graph illustrating a thickness profile of an electrode and a thickness profile of an electrode assembly according to a manufacturing example.
FIG. 5 is a cross-sectional view of an exterior according to an embodiment of the present invention.
FIG. 6 is a cross-sectional view of an exterior according to another embodiment of the present invention.

### DETAILED DESCRIPTION

Hereinafter, preferred embodiments of the present invention will be described in detail so that those skilled in the art to which the present invention belongs can easily carry them out with reference to the accompanying drawings. However, the present invention may be embodied in various different forms and is not limited or restricted by the embodiments described below.

For clarity of the present invention, detailed descriptions of parts not related to the description or related public knowledge technology that may unnecessarily obscure the gist of the present invention have been omitted, and in appending reference numerals to components of each drawing in this specification, the same or similar reference numerals are attached to the same or similar components throughout the specification.

In addition, terms or words used in this specification and claims should not be construed as limited to their ordinary or dictionary meanings, and based on the principle that the inventor can appropriately define the concept of terms to explain his or her invention in the best way, they should be interpreted as meanings and concepts consistent with the technical idea of the present invention.

On the drawings, each component of the secondary battery according to an embodiment of the present invention is schematically shown, and the size or line thickness of the components may be somewhat exaggerated for convenience of understanding.

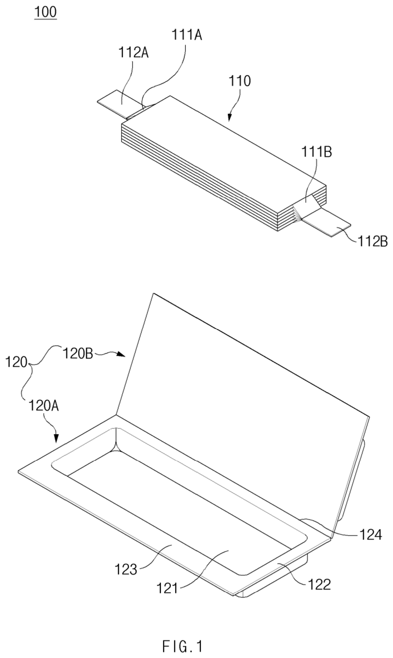

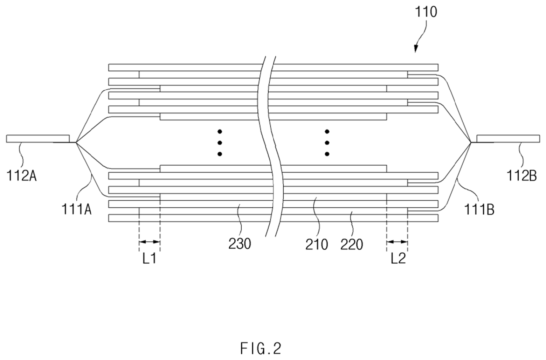

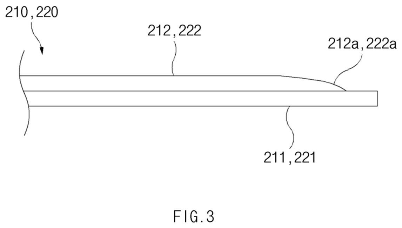

FIG. 1 is an exploded perspective view of a battery cell according to an embodiment of the present invention, FIG. 2 is a front view of the electrode assembly shown in FIG. 1, and FIG. 3 is an enlarged view illustrating a part of the positive electrode shown in FIG. 2.

A battery cell (100) according to an embodiment of the present invention may include an electrode assembly (110) and an exterior (120).

The electrode assembly (110) may have a positive electrode (210) and a negative electrode (220) alternatingly interposed with a separator (230) therebetween. That is, the electrode assembly (110) may include the positive electrode (210), the negative electrode (220), and the separator (230) interposed between the positive electrode (210) and the negative electrode (220). The electrode assembly (110) may be accommodated in the exterior (120), more specifically, in an accommodation portion (121) to be described later.

The positive electrode (210), the negative electrode (220), and the separator (230) may each be provided in plurality. However, the present invention is not limited thereto and may vary depending on the type of the electrode assembly (110). The type of the electrode assembly (110) includes a stack type, a jelly roll type, a stack-and-folding type, etc., and the type of the electrode assembly (110) is not limited.

The electrode assembly (110) may be provided with a positive electrode lead (112A) and a negative electrode lead (112B). The positive electrode lead (112A) may be electrically connected to the positive electrode (210), and the negative electrode lead (112B) may be electrically connected to the negative electrode (220). The positive electrode lead (112A) may protrude toward one side of the exterior (120), and the negative electrode lead (112B) may protrude toward the other side of the exterior (120). That is, the positive electrode lead (112A) and the negative electrode lead (112B) may protrude in mutually opposite directions.

More specifically, the positive electrode lead (112A) may be connected to a positive electrode tab (111A) of the electrode assembly (110), and the negative electrode lead (112B) may be connected to a negative electrode tab (111B) of the electrode assembly (110). Each positive electrode tab (111A) may be connected to each positive electrode (210), and each negative electrode tab (111B) may be connected to each negative electrode (220). The plurality of positive electrode tabs (111A) may gather together to form a positive electrode tab junction, and the positive electrode lead (112A) may be connected to the positive electrode tab junction by welding or the like. Similarly, the plurality of negative electrode tabs (111B) may gather together to form a negative electrode tab junction, and the negative electrode lead (112B) may be connected to the negative electrode tab junction by welding or the like.

The positive electrode tab (111A) and the negative electrode tab (111B) may act as a path for electrons to move between the inside and the outside of the electrode assembly (110). The positive electrode tab (111A) may protrude from one side of the electrode assembly (110), and the negative electrode tab (111B) may protrude from the other side of the electrode assembly (110).

The inner end of the positive electrode lead (112A) may be connected to the positive electrode tab (111A), and the outer end may protrude to the outside of one side of the exterior (120). The inner end of the negative electrode lead (112B) may be connected to the negative electrode tab (111B), and the outer end may protrude to the outside of the other side of the exterior (120).

Meanwhile, the exterior (120) may be formed by forming a laminate sheet and may accommodate the electrode assembly (110) inside. That is, the exterior (120) may be a pouch-type exterior.

The exterior (120) may include a first exterior (120A) in which an accommodation portion (121) for accommodating the electrode assembly (110) is formed, a second exterior (120B) that covers the accommodation portion (121), and sealing parts (122, 123) where the first exterior (120A) and the second exterior (120B) meet and are sealed.

As shown in FIG. 1, the first exterior (120A) and the second exterior (120B) may be connected by a folding part (124). In this case, the first exterior (120A) and the second exterior (120B) may be sealed by meeting on the remaining three sides, excluding the side where the folding part (124) is formed.

However, the present invention is not limited thereto, and the first exterior (120A) and the second exterior (120B) may be manufactured separately. In this case, the first exterior (120A) and the second exterior (120B) may be sealed by meeting on four sides.

In the first exterior (120A), the accommodation portion (121) may be recess-formed to a predetermined depth. The depth of the accommodation portion (121) may mean the recess depth relative to the sealing parts (122, 123). The second exterior (120B) may cover this accommodation portion (121). The second exterior (120B) may be formed flat.

However, the present invention is not limited thereto, and the accommodation portion (121) may also be formed in the second exterior (120B). In this case, the accommodation portion (121) of the second exterior (120B) may cover the accommodation portion (121) of the first exterior (120A). That is, both accommodation portions (121) may form a single receiving space that accommodates the electrode assembly (110).

The sealing parts (122, 123) may include a first sealing part (122) from which the electrode leads (112A, 112B) protrude, and a second sealing part (123) extending in a direction different from the extending direction of the first sealing part (122). The first sealing part (122) may be a short side sealing part, and the second sealing part (123) may be a long side sealing part.

The first sealing part (122) may be located on a part of the circumference of the accommodation portion (121). For example, the first sealing part (122) may be located on both sides of the accommodation portion (121) in the overall length direction and may extend in the overall width direction. The electrode leads (112A, 112B) may protrude to the outside of the exterior (120) through the first sealing part (122).

The second sealing part (123) may be located on another part of the circumference of the accommodation portion (121). For example, the second sealing part (123) may be located on one side of the accommodation portion (121) in the overall width direction and may extend in the overall length direction. The second sealing part (123) may connect both first sealing parts (122). The second sealing part (123) may be located opposite to the folding part (124). The second sealing part (123) may be a part from which the electrode leads (112A, 112B) do not protrude.

Meanwhile, referring to FIG. 2, the negative electrode (220) generally has a larger size than the positive electrode (210). That is, the end of the negative electrode (220) may protrude outward more than the end of the positive electrode (210).

Also, considering the protruding direction of each electrode tab (111A, 111B), the length by which the end of the negative electrode (220) protrudes relative to the end of the positive electrode (210) may be different on both sides of the electrode assembly (110).

More specifically, on the one side of the electrode assembly (110) from which the positive electrode lead (112A) protrudes (the left side based on FIG. 2), the end of the negative electrode (220) may protrude by a first length (L1) with respect to the end of the positive electrode (210). On the other side of the electrode assembly (110) from which the negative electrode lead (112B) protrudes (the right side based on FIG. 2), the end of the negative electrode (220) may protrude by a second length (L2), which is longer than the first length (L1), with respect to the end of the positive electrode (210). That is, the end of the negative electrode (220) may protrude more on the side from which the negative electrode lead (112B) protrudes.

Referring to FIG. 3, each electrode (210, 220) may include a current collector (211, 221) and an active material layer (212, 222) coated on the current collector (211, 221). Since the materials mainly used for the positive current collector (211), the positive active material layer (212), the negative current collector (221), and the negative active material layer (222) are well-known techniques, a description thereof will be omitted.

During the coating process of the active material layers (212, 222), a sliding portion (212a, 222a) where the coating thickness decreases may occur at the end of the active material layers (212, 222). Due to this, the thickness of the electrode (210, 220) may decrease toward the end.

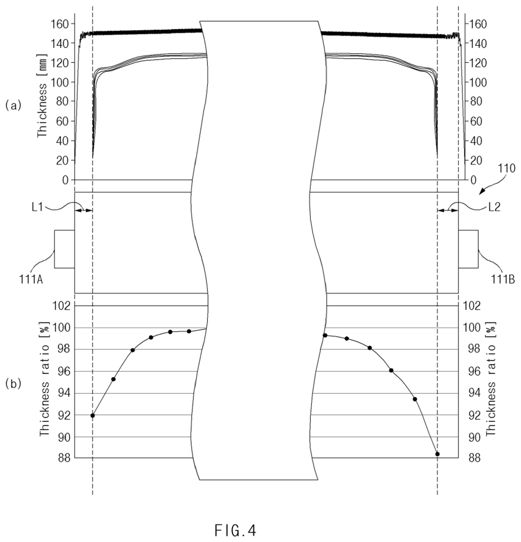

In particular, for the electrode assembly (110), the point where the sliding portion (212a) of the positive active material layer (212) starts may be located more inward than the point where the sliding portion (222a) of the negative active material layer (222) starts. This is because, as described above, the negative electrode (220) has a larger size than the positive electrode (210). Therefore, the decrease in the thickness of the electrode assembly (110) may start from the point where the sliding portion (212a) of the positive active material layer (212) starts. Considering this, when designing the end regions (1212, 1213) (refer to FIG. 4) of the exterior (120) to be described later, the design may consider the thickness reduction of the positive electrode (210) rather than the negative electrode (220).

FIG. 4 is a graph illustrating a thickness profile of an electrode and a thickness profile of an electrode assembly according to a manufacturing example.

According to the manufacturing example, on the one side (left side) of the electrode assembly (110) from which the positive electrode tab (111A) protrudes, the end of the negative electrode (220) protruded by 2.3 mm more than the end of the positive electrode (210). Also, on the other side (right side) of the electrode assembly (110) from which the negative electrode tab (111B) protrudes, the end of the negative electrode (220) protruded by 3.1 mm more than the end of the positive electrode (210). That is, the first length (L1) was measured as 2.3 mm, and the second length (L2) was measured as 3.1 mm. As described above, it can be seen that the second length (L2) is longer than the first length (L1).

FIG. 4(a) shows the thickness profiles of the positive electrode (210) and the negative electrode (220). Here, the horizontal axis represents the position in the length direction of the electrode assembly (110), and the vertical axis represents the thickness (mm) of the electrode (210, 220) at each position.

Referring to FIG. 4(a), the thickness of the positive electrode (210) gradually decreases toward both ends of the electrode assembly (110) and then sharply decreases at the end of the positive electrode (210). Similarly, the thickness of the negative electrode (220) gradually decreases toward both ends of the electrode assembly (110) and then sharply decreases at the end of the negative electrode (220). Here, the part where the thickness of each electrode (210, 220) gradually decreases may be the part where the sliding portion (212a, 222a) is gently formed.

Also, referring to FIG. 4(a), it can be seen that the rate of thickness reduction of the positive electrode (210) is greater than the rate of thickness reduction of the negative electrode (220). That is, the difference between the thickness of the positive electrode (210) and the thickness of the negative electrode (220) increases toward both ends of the electrode assembly (110). Therefore, the rate of thickness change of the electrode assembly (110) may primarily be determined by the rate of thickness change of the positive electrode (210).

Accordingly, FIG. 4(b) shows the thickness profile of the electrode assembly (110) within the range where the positive electrode (210) is located. Here, the horizontal axis represents the position in the length direction of the electrode assembly (110), and the vertical axis represents the ratio of the thickness of the electrode assembly (110) at each position, based on the thickness of the central part of the electrode assembly (110).

Referring to FIG. 4(b), the thickness of the electrode assembly (110) decreases toward both ends, and the rates of thickness reduction at both ends may be different from each other. In particular, it can be seen that the rate of thickness reduction of the electrode assembly (110) is greater toward the other side (right side) from which the negative electrode tab (111B) protrudes than the one side (left side) from which the positive electrode tab (111A) protrudes.

In this regard, as described above, the distance between the ends of the negative electrode (220) and the positive electrode (210) is greater on the side (right side) from which the negative electrode tab (111B) protrudes than the side (left side) from which the positive electrode tab (111A) protrudes (L2 > L1). In other words, the positive electrode (210) is relatively biased toward one side from which the positive electrode tab (111A) protrudes. Therefore, due to the positive electrode (210), which has a greater influence on the thickness change of the electrode assembly (110), being biased toward one side, the rate of thickness reduction of the electrode assembly (110) may be greater toward the other side (right side) from which the negative electrode tab (111B) protrudes than the one side (left side) from which the positive electrode tab (111A) protrudes.

However, the influence of this bias of the positive electrode (210) on the thickness of the electrode assembly (110) increases toward both ends of the electrode assembly (110), and the influence may be insignificant closer to the center of the electrode assembly (110). Therefore, the point where the thickness of the electrode assembly (110) starts to decrease may be the same or similar on both sides. In fact, in this manufacturing example, the thickness started to decrease from two points that were 20 mm from both ends of the electrode assembly (110).

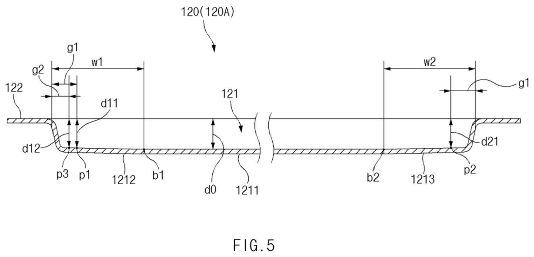

FIG. 5 is a cross-sectional view of an exterior according to an embodiment of the present invention.

The exterior (120) according to an embodiment of the present invention may be designed considering the thickness profile of the electrode assembly (110) described above.

The accommodation portion (121) of the exterior (120) may include a center region (1211) and a pair of end regions (1212, 1213). More specifically, the bottom surface of the accommodation portion (121) may include the center region (1211) and the pair of end regions (1212, 1213).

The center region (1211) may have an approximately uniform depth dimension (d0).

The pair of end regions (1212, 1213) may be located on opposite sides of the center region (1211). More specifically, the pair of end regions (1212, 1213) may be located on opposite sides of the center region (1211) in the length direction of the accommodation portion (121).

The pair of end regions (1212, 1213) may be located inward of a punch edge connecting both side surfaces and a bottom surface of the accommodation portion (121).

The depth dimension of each end region (1212, 1213) may be smaller than the depth dimension (d0) of the center region (1211). Thus, the thickness difference between the central part and the edge part of the electrode assembly (110) described above can be compensated for. Compensation may mean minimizing the empty space within the accommodation portion (121). Thereby, problems such as lithium precipitation or electrode shifting, which may occur in the electrode assembly (110) due to the empty space, can be resolved.

The pair of end regions (1212, 1213) may be asymmetric to each other. More specifically, the depth profiles of the pair of end regions (1212, 1213) may be different from each other in the length direction of the accommodation portion (121). Thus, the different rates of thickness reduction at both ends of the electrode assembly (110) described above can be compensated for.

The depth dimension of each end region (1212, 1213) may decrease toward the outside. Thus, the decrease in the thickness of the electrode assembly (110) toward both ends, described above, can be compensated for.

As described above, the rate of thickness change of the electrode assembly (110) may primarily be determined by the rate of thickness change of the sliding portion (212a) (refer to FIG. 3) of the positive electrode (210). Therefore, each end region (1212, 1213) may overlap the sliding portion (212a) of the positive electrode (210) in the thickness direction of the electrode assembly (110). Thus, the thickness reduction of the sliding portion (212a) of the positive electrode (210) can be compensated for.

More specifically, the pair of end regions (1212, 1213) may include a first end region (1212) and a second end region (1213). The first end region (1212) may be located on one side of the center region (1211) from which the positive electrode lead (112A) (refer to FIG. 2) protrudes. The second end region (1213) may be located on the other side of the center region (1211) from which the negative electrode lead (112B) protrudes.

A boundary (b1) between the center region (1211) and the first end region (1212) may be the point where the depth of the accommodation portion (121) starts to decrease when approaching one side surface of the accommodation portion (121) in the length direction of the accommodation portion (121). A boundary (b2) between the center region (1211) and the second end region (1213) may be the point where the depth of the accommodation portion (121) starts to decrease when approaching the other side surface of the accommodation portion (121) in the length direction of the accommodation portion (121).

As described above, the point where the thickness of the electrode assembly (110) starts to decrease may be the same or similar on both sides. Therefore, the widths of the first end region (1212) and the second end region (1213) may correspond to each other. More specifically, the width (w1) of the first end region (1212) may correspond to the width (w2) of the second end region (1213) in the length direction of the accommodation portion (121). Here, "correspond" may mean being the same or similar.

Meanwhile, a first point (P1) located within the first end region (1212) and located at a first distance (g1) from one side surface of the accommodation portion (121) can be defined. Similarly, a second point (P2) located within the second end region (1213) and located at the first distance (g1) from the other side surface of the accommodation portion (121) can be defined. In this case, the depth dimension (d11) of the first point (P1) may be greater than the depth dimension (d21) of the second point (P2).

That is, based on each point that is the same distance from both side surfaces of the accommodation portion (121), the depth dimension of the second end region (1213) may be smaller than the depth dimension of the first end region (1212). In other words, the depth dimension of the second end region (1213) may decrease more rapidly than the depth dimension of the first end region (1212) closer to both side surfaces of the accommodation portion (121). This may mean that the rate of depth reduction of the second end region (1213) is greater than the rate of depth reduction of the first end region (1212) in the length direction of the accommodation portion (121).

As described above, the rate of thickness reduction of the electrode assembly (110) may be greater toward the other side (right side) from which the negative electrode lead (112B) protrudes than the one side (left side) from which the positive electrode lead (112A) protrudes. Accordingly, the rate of depth reduction of the second end region (1213) is formed to be greater than the rate of depth reduction of the first end region (1212), thereby appropriately compensating for the different rates of thickness reduction at both ends of the electrode assembly (110).

Meanwhile, a third point (P3) located within the first end region (1212) and forming a second distance (g2) smaller than the first distance (g1) from one side surface of the accommodation portion (121) can be defined. In this case, the depth dimension (d12) of the third point (P3) may be smaller than the depth dimension (d11) of the first point (P1) and greater than or equal to the depth dimension (d21) of the second point (P2).

That is, when approaching one side surface of the accommodation portion (121), the depth of the first end region (1212) may decrease more slowly. This may mean that the rate of depth reduction of the first end region (1212) is even smaller. Thereby, the different rates of thickness reduction at both ends of the electrode assembly (110) can be compensated for even more appropriately.

In this regard, in the case of the exterior according to the manufacturing example, the depth dimension (d0) of the center region (1211) was 5.76 mm, the first distance (g1) was 3 mm, the second distance (g2) was 2 mm, the depth dimension (d21) of the second point (P2) was 5.07 mm, and the depth dimension (d12) of the third point (P3) was measured as 5.3 mm. The depth dimension (d11) of the first point (P1) was not directly measured but was formed to be greater than the depth dimension (d12) of the third point (P3) (5.3 mm).

Also, the second distance (g2) may correspond to the first length (L1) (refer to FIG. 4) described above, and the first distance (g1) may correspond to the second length (L2) (refer to FIG. 4) described above. Thereby, the thickness reduction rate of the electrode assembly (110) due to the bias of the positive electrode (210) described above can be appropriately compensated for.

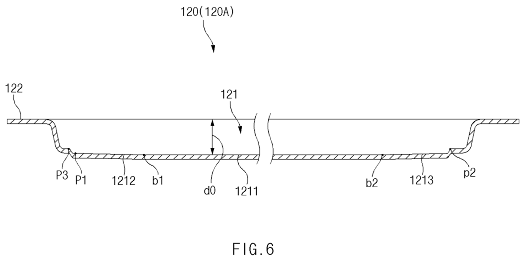

FIG. 6 is a cross-sectional view of an exterior according to another embodiment of the present invention.

Hereinafter, contents overlapping the description above will be adopted, and the focus will be on the differences.

In the case of the exterior (120) according to another embodiment of the present invention, a step may be formed in the first end region (1212) such that the height decreases at the third point (P3). Also, a step may be formed in the second end region (1213) such that the height decreases at the second point (P2).

More specifically, when approaching one side surface of the accommodation portion (121), the depth of the first end region (1212) may decrease discontinuously at the third point (P3). Also, when approaching the other side surface of the accommodation portion (121), the depth of the second end region (1212) may decrease discontinuously at the second point (P2).

As described above, the distance (g2) between one side surface of the accommodation portion (121) and the third point (P3) may correspond to the length (L1) by which the negative electrode (220) protrudes more than the positive electrode (210) on one side of the electrode assembly (110). Also, the distance (g1) between the other side surface of the accommodation portion (121) and the second point (P2) may correspond to the length (L2) by which the negative electrode (220) protrudes more than the positive electrode (210) on the other side of the electrode assembly (110).

That is, the region between one side surface of the accommodation portion (121) and the third point (P3) in the first end region (1212) and the edge part of the negative electrode (220) protruding more than the positive electrode (210) on one side of the electrode assembly (110) may overlap in the thickness direction of the electrode assembly (110). Similarly, the region between the other side surface of the accommodation portion (121) and the second point (P2) in the second end region (1213) and the edge part of the negative electrode (220) protruding more than the positive electrode (210) on the other side of the electrode assembly (110) may overlap in the thickness direction of the electrode assembly (110).

Therefore, by forming a step such that the height decreases at the third point (P3) of the first end region (1212) and the second point (P2) of the second end region (1213), the thickness reduction of the electrode assembly (200) due to the size difference between the positive electrode (210) and the negative electrode (220) can be effectively compensated for.

The above description is merely exemplary of the technical idea of the present invention, and those skilled in the art to which the present invention belongs will be able to make various modifications and variations without departing from the essential characteristics of the present invention.

Therefore, the embodiments disclosed in the present invention are not intended to limit the technical idea of the present invention but to explain it, and the scope of the technical idea of the present invention is not limited by these embodiments.

The protection scope of the present invention should be construed by the following claims, and all technical ideas within the scope equivalent thereto should be construed as being included in the scope of the right of the present invention.

### [List of Reference Numerals]

| | | | |
|---|---|---|---|
| 100: B | Battery cell | 110: | Electrode assembly |
| 111A: | Positive electrode tab | 111B: | Negative electrode tab |
| 112A: | Positive electrode lead | 112B: | Negative electrode lead |
| 120: | Exterior | 121: | Accommodation portion |
| 122: | First sealing part | 123: | Second sealing part |
| 1211: | Center region | 1212: | First end region |
| 1213: | Second end regior | 210: | Positive electrode |
| 220: | Negative electrode | 230: | Separator |

## Claims

1. A battery cell comprising:
an electrode assembly in which a positive electrode and a negative electrode are alternatingly interposed with a separator therebetween; and
a pouch-type exterior including an accommodation portion that is recess-formed to accommodate the electrode assembly,
wherein the accommodation portion includes:
a center region; and
a pair of end regions located on opposite sides of the center region, having a depth dimension smaller than a depth dimension of the center region, and being asymmetric to each other.

2. The battery cell of Claim 1, wherein the pair of end regions are located inward of a punch edge connecting both side surfaces and a bottom surface of the accommodation portion.

3. The battery cell of Claim 1, wherein the depth dimension of the pair of end regions decreases toward the outside.

4. The battery cell of Claim 1, wherein the pair of end regions overlap a sliding portion of the positive electrode in a thickness direction of the electrode assembly.

5. The battery cell of Claim 1, wherein the electrode assembly is provided with:
a positive electrode tab protruding from one side of the electrode assembly and electrically connected to the positive electrode; and
a negative electrode tab protruding from the other side of the electrode assembly and electrically connected to the negative electrode,
the pair of end regions includes:
a first end region located on one side of the center region from which the positive electrode tab protrudes; and
a second end region located on the other side of the center region from which the negative electrode tab protrudes.

6. The battery cell of Claim 5, wherein the widths of the first end region and the second end region correspond to each other.

7. The battery cell of Claim 5, wherein a depth dimension of a first point located within the first end region and located at a first distance from one side surface of the accommodation portion is greater than a depth dimension of a second point located within the second end region and located at the first distance from the other side surface of the accommodation portion.

8. The battery cell of Claim 7, wherein a depth dimension of a third point located within the first end region and located at a second distance smaller than the first distance from one side surface of the accommodation portion is smaller than the depth dimension of the first point and greater than or equal to the depth dimension of the second point.

9. The battery cell of Claim 8, wherein on one side of the electrode assembly from which the positive electrode tab protrudes, the end of the negative electrode protrudes by a first length with respect to the end of the positive electrode, and
on the other side of the electrode assembly from which the negative electrode tab protrudes, the end of the negative electrode protrudes by a second length longer than the first length with respect to the end of the positive electrode.

10. The battery cell of Claim 9, wherein the first length corresponds to the second distance, and the second length corresponds to the first distance.

11. The battery cell of Claim 8, wherein in the first end region, a step is formed such that the height decreases at the third point, and
in the second end region, a step is formed such that the height decreases at the second point.

12. A pouch-type exterior including an accommodation portion that is recess-formed, wherein the accommodation portion includes:
a center region; and
a pair of end regions located on opposite sides of the center region, having a depth dimension smaller than a depth dimension of the center region, and being asymmetric to each other.
